# EUROPEAN PATENT APPLICATION

(11) **EP 2 397 766 A1**
(43) Date of publication of application: **21.12.2011**
(21) Application number: 11001666.4
(22) Date of filing: 01.03.2011
(51) Int. Cl.: F24B 1/188, F24B 9/04, F24H 1/24, F28D 7/10, F28D 7/00

(54) **Solid fuel stove and liquid heating system**

(30) Priority: 01.03.2010 GB 1003427
(71) Applicant: Broseley Fires Limited, Battlefield Enterprise Park Shrewsbury SY1 3AB (GB)
(72) Inventor: Reeves, John, Sunderland, SY1 3AB (GB); Serplet, Malcolm, Sunderland, SY1 3AB (GB); Zdybek, Tomasz, Sunderland, SY1 3AB (GB)
(74) Representative: Elsworth, Dominic Stephen

(57) **Abstract**

A boiler for a solid fuel burning stove, the boiler comprises a first fluid inlet and a first fluid outlet and a first fluid passageway between the first fluid inlet and outlet, the boiler being adapted to transfer heat from a heat source proximate the boiler to a heating fluid medium in the first fluid passageway. The boiler further comprises a second fluid inlet and a second fluid outlet and a second fluid passageway extending between the second fluid inlet and outlet. The second fluid passageway is configured to extract heat from the heated fluid medium upon passage of a cooling fluid medium through the second fluid passageway.

## Description

### Field of the Invention

The present invention relates to solid fuel burning stoves and in particular to solid fuel burning stoves including liquid heating means and a heating system connected with such a solid fuel burning stove.

### Background of the Invention

Solid fuel burning stove, such as wood burning stove, coal burning stoves, or multi-fuel stoves in which different types of solid fuel may be burned, have been known for many years. Home owners increasingly install solid fuel burning stoves from a number of reasons. First, they are considered to form an attractive centre piece to a room, second they burn solid fuel efficiently (at least more efficiently than an open fire) and third, when burning wood they are considered to be environmentally friendly because wood fuel is regarded as being carbon neutral.

Solid fuel burning stoves may be adapted to heat water, either for domestic hot water, or to power a central heating system. There are a number of problems associated with using a solid fuel burning stove to heat water, whether for domestic hot water or for use in a heating system. Typically, the boiler comprises a jacket mounted on one or more of the side walls of the stove, replacing the fire brick lining. The constant introduction of cold water into the boiler and removal of hot water therefrom affects the efficiency of the stove. In terms of the efficient use of fuel, a stove has an optimum temperature operation range. Using the stove to heat water cools the stove until such time as the water is heated to a required temperature. Cooling the stove results in the stove operating at reduced efficiency. Further, whereas in a central heating system in which water is heated by a burner burning oil, gas or wood pellets the supply of fuel may be controlled, in a solid fuel burning stove, the supply of fuel is largely uncontrolled, in that the stove is filled with fuel from time to time, but once filled with fuel and that fuel has been ignited, it is difficult to then stop the ignited fuel from burning, even if dampers provided to restrict air flow are shut down. This presents something of a problem in that the water in the system being heated by the stove may be heated to such an extent that the pressure in the water builds up and somewhere the water system explodes, resulting in steam escaping into the area of the explosion. Obviously, this would present severe danger to anyone in the vicinity.

In the United Kingdom, for safety reasons, the use of solid fuel stoves to heat water, whether for domestic hot water or central heating, has been limited to vented hot water systems, i.e. those comprising a header tank connected to the mains. Such systems include a pipe leading from the hot water outlet pipe of the stove's boiler to the header tank. If the water in the stove overheats, the overheated water is released into the header tank, which may then overflow to a drain.

US Patent 4,496,099 describes a low pressure heating system incorporating a reservoir which the heat exchanger vents to.

US Patent 4,230,267 describes a heating system for a building incorporating heat exchangers on the sides of a wood burning stove. The system includes a pressure relief valve set to operate when the temperature of the heating medium exceeds 180 degrees F.

US Patent 4,534,319 describes a heating system including a heat exchanger comprising a plurality of pipes that extend around the fire box of a wood burning stove. Two pressure relief valves are provided to allow the escape of overheated water in the heating system.

However, there is an increasing move towards equipping houses with unvented, also known as pressurised, water systems. In such systems the hot water system in the house is connected directly to the main supply, rather than via a header tank. In an unvented system where the water is heated by a central heating boiler, the supply of oil, gas or woodchip may be arrested if the water temperature exceeds a certain threshold, but this is not possible with a solid fuel stove, as described above.

Whilst it is well known to use solid fuel burning stoves to heat water, it is also recognised that the operation of known stoves is at least somewhat compromised by the boilers fitted to them to heat water.

It would therefore be desirable to provide an improved solid fuel burning stove that is better adapted to heating water.

In a solid fuel burning stove it is conventional to place the heat exchanger in close proximity to the combustion zone, i.e. the heat exchanger may form or be attached to wall of the stove, or surround the combustion zone of the stove, as in US4,534,319, where the fuel actually sits on some of the heat exchange pipes.

It has been found that a significant increase in efficiency of operation of the stove can be obtained by situating the heat exchanger more remotely from the combustion zone. Further, by the use a particular arrangement of heat exchanger plates and water pipes, water for a heating system can be heated very efficiently. Conversely, the heat exchanger may be cooled quickly and efficiently, thereby providing a boiler convenient for use in an unvented hot water system.

It would also be desirable to provide a heating system including a solid fuel burning stove that is adapted for use with an unvented water system.

The present invention seeks to provide such a heating system in which a solid fuel burning stove is the heat source in an unvented water system.

### Summary of the Invention

According to a first aspect of the invention there is provided a boiler for a solid fuel burning stove, the boiler comprising a first fluid inlet and a first fluid outlet and a first fluid passageway between the first fluid inlet and outlet, the boiler being adapted to transfer heat from a heat source proximate the boiler to a heating fluid medium in the first fluid passageway, the boiler further comprising a second fluid inlet and a second fluid outlet and a second fluid passageway extending between the second fluid inlet and outlet, and wherein the second fluid passageway is configured to extract heat from the heated fluid medium upon passage of a cooling fluid medium through the second fluid passageway.

Preferably, the boiler comprises a chamber and wherein the chamber provides the first fluid passageway.

Advantageously, the second fluid passageway comprises a conduit extending between the second fluid inlet and second fluid outlet, and being situated at least partially in the first fluid passageway.

The first fluid passageway may be bounded by at least one wall, the at least one wall having an inner surface and wherein at least one fin extends from an inner surface of the first fluid passageway. A plurality of spaced apart fins may extend from the said inner surface. Advantageously, the second fluid passageway extends between the said spaced apart fins.

Preferably, the first fluid passageway includes a plurality of spaced apart fluid carrying conduits and the second fluid passageway passes through at least one of the said conduits.

The spaced apart fluid carrying conduits preferably lie on a common axis.

Advantageously, the spaced apart fluid carrying conduits lie on an axis that is inclined to the horizontal. Preferably, the said axis is inclined to the horizontal at an angle of up to 30 degrees, and more preferably the said axis is inclined to the horizontal at an angle of 10 degrees.

The boiler may further include a temperature sensor configured to sense the temperature of the heating fluid medium in the boiler.

In one embodiment of the invention the boiler includes a plate situated above the said spaced apart fluid carrying conduits. The plate may form an underside of said chamber. The plate may be inclined to the horizontal, preferably by an angle greater than or equal to the angle of inclination to the horizontal of the axis on which said fluid carrying conduits lie. The plate may be inclined to the horizontal at an angle of 12 degrees.

According to a second embodiment of the invention there is provided a solid fuel burning stove including a firebox, a fuel bed, at least one air inlet, an exhaust gas outlet and a boiler having a fluid inlet and a fluid outlet, wherein the said boiler is situated in the top part of the firebox.

Preferably, the boiler is a boiler according to a second aspect of the invention.

According to a third aspect of the invention there is provided a heating system including a stove according to the second aspect of the invention including a boiler according to the first aspect of the invention and a cold water safety system including a valve, wherein the first fluid inlet is connected to a source of heating fluid medium, and the first outlet is connected to a heating circuit, and wherein the second fluid inlet is connected to a source of pressurised cold water and the second fluid outlet is connected to an outflow, and wherein the valve is configured to open when a signal received from the temperature sensor associated with said boiler exceeds a first threshold temperature. The said valve may be configured to remain open until the sensed boiler temperature has fallen below a second threshold temperature.

The heating system may further include a pressure relief valve in the heating circuit, said pressure relief valve being configured to open when the pressure within the heating circuit exceeds a threshold pressure.

The heating system may further include a thermal valve connected to the source of heating fluid medium, the heating circuit and the first input, wherein the thermal valve is adapted to control the temperature of the water flowing into the boiler through the first input.

According to a fourth aspect of the invention there is provided a boiler for a solid fuel burning stove, the boiler comprising a first fluid inlet and a first fluid outlet and a first fluid passageway between the first fluid inlet and outlet, the boiler being adapted to transfer heat from a heat source proximate the boiler to a heating fluid medium in the first fluid passageway, the boiler comprises a chamber and wherein the chamber provides the first fluid passageway.

At least one fin may extend from an inner surface of a wall of the chamber. A plurality of spaced apart fins may extend from the said inner surface.

Preferably, the first fluid passageway includes a plurality of spaced apart fluid carrying conduits.

The spaced apart fluid carrying conduits preferably lie on a common axis.

Advantageously, the spaced apart fluid carrying conduits lie on an axis that is inclined to the horizontal. Preferably, the said axis is inclined to the horizontal at an angle of up to 30 degrees, and more preferably the said axis is inclined to the horizontal at an angle of 10 degrees.

Preferably, an underside of the chamber is formed by a plate, which is situated above the said spaced apart fluid carrying conduits. The plate may be inclined to the horizontal, preferably by an angle greater than or equal to the angle of inclination to the horizontal of the axis on which said fluid carrying conduits lie. The plate may be inclined to the horizontal at an angle of 12 degrees.

The boilers of the invention may be removably mountable in a solid fuel burning stove. The stove may include support members adapted to support the boiler in the upper part of the stove.

The stove may include a water jacket in a side wall of the firebox. The main water inlet may be located in the water jacket and an outlet of the water jacket may be in fluid communication with the first fluid inlet of the boiler. The water jacket may include at least one baffle configured to direct the flow of cool fluid entering the jacket around said jacket and towards the outlet thereof.

The boilers of the invention may be an integral part of a stove.

The stove may include a baffle adapted to direct the flow of incoming air towards the fire box and exhaust gas exiting the boiler towards an exhaust flue.

By mounting the boiler in the upper part of the stove, the boiler is positioned to extract heat from the exhaust gases. A significant proportion of the heat in exhaust gases is lost, and hence the stove of the present invention can bv means of the boiler extract energy (in the form of heat) that would otherwise be lost to atmosphere through the flue. Further, because the boiler is situated away from the hearth and as distant as is possible from the combustion zone (i.e. the area occupied by the combusting fuel), the combustion temperature is not reduced in the same way as with the boilers of the prior are, which may form the fuel bed, or one or more walls of the stove. Such boilers remove heat and energy directly from the combusting fuel, rather than from exhaust gases. In the embodiment where one or more of the side walls of the stove is provided with a water jacket, their provision allows a greater volume of water to be heated for a given size of stove.

By providing first and second fluid circuits, one heating circuit for heating water and/or a space heating system, and the other being for cooling the boiler, the stove of the invention may be used in systems that known solid fuel burning stoves would not, such as pressurised or unvented systems. This is because the second fluid circuit can control the heat in the boiler.

Further, the arrangement of the boiler in the form of a chamber, preferably with tubes extending across the chamber provides a thermally efficient and compact boiler, thereby allowing it to be fitted into a solid fuel burning stove with comparative ease. By inclining a plate of the chamber to the horizontal, a good flow of gases within the fire box is provided for. Further, the plate may replace a baffle that may otherwise be present in the stove to promote good gas flow. Still further, with the plate lying on an angle of inclination that is greater than or equal to the angle of inclination of the axis on which the fluid passageways lie ensures that the space between the plate and the fluid passageways is easily cleaned.

### Brief Description of the Drawings

In the Drawings, which illustrate preferred embodiments of the invention, and are by way of example:
Figure 1 is a schematic representation of an a embodiment of a solid fuel burning stove according to the invention;
Figure 2 is a cross-sectional elevation of the stove illustrated in Figure 1;
Figure 3 is a schematic representation of the stove illustrated in Figures 1 and 2 with the front part of the stove removed;
Figure 4 is a schematic representation of a boiler according to an aspect of the invention;
Figure 5 is a schematic representation of the boiler illustrated in Figure 4 with a baffle plate removed;
Figure 6 is a schematic representation of the boiler illustrated in Figures 4 and 5 with the cover removed;
Figure 7 is a schematic representation of the boiler illustrated in Figures 4 to 6 from the rear;
Figure 7a is a schematic representation of the inner part of the boiler illustrated in Figure 6;
Figure 8 is an exploded schematic representation of the inner part of the boiler illustrated in Figure 7a;
Figure 9 illustrates a pressurised water circuit including a stove according to the present invention and a combi central heating boiler;
Figure 10 illustrates a pressurised water circuit including a stove according to the present invention and a central heating boiler;
Figure 11 illustrates a pressurised water circuit including a stove according to the present invention, a central heating boiler, a solar hot water heater and a thermal store;
Figure 12 illustrates a pressurised water circuit including a stove according to the present invention, a central heating boiler, a solar hot water and central heating heater and a thermal store;
Figure 13 is a cut-away schematic side view of a solid view stove according to another aspect of the invention;
Figure 13a is a cut away view of a part of the stove illustrated in Figure 13 from the side;
Figure 13b is a cut away view of a part of the stove illustrated in Figures 13 and 13a from above;
Figure 14 is a schematic rear view of the stove illustrated in Figure 13 in a partially assembled state;
Figure 15 is a schematic rear view of the stove illustrated in Figures 13 and 14;
Figure 16 is a schematic representation of the stove illustrated in Figures 13 to 15;
Figure 17 is a schematic representation of the stove illustrated in Figure 16 from the rear;
Figure 18 is the representation of the stove illustrated in Figure 17 view from the side;
Figure 19 illustrates the path followed by water through the boiler of the stove illustrated in Figures 13 to 18 from one side;
Figure 20 illustrates the path followed by water through the boiler of the stove illustrated in Figures 13 to 18 from another side;
Figure 21 illustrates the path followed by cooling water through the boiler of the stove illustrated in Figures 13 to 18;
Figure 22 illustrates the path followed by secondary and tertiary air through the stove illustrated in Figures 13 to 18; and
Figure 23 illustrates the path followed by flue gases through the stove illustrated in Figures 13 to 18.

### Detailed Description of the Preferred Embodiments

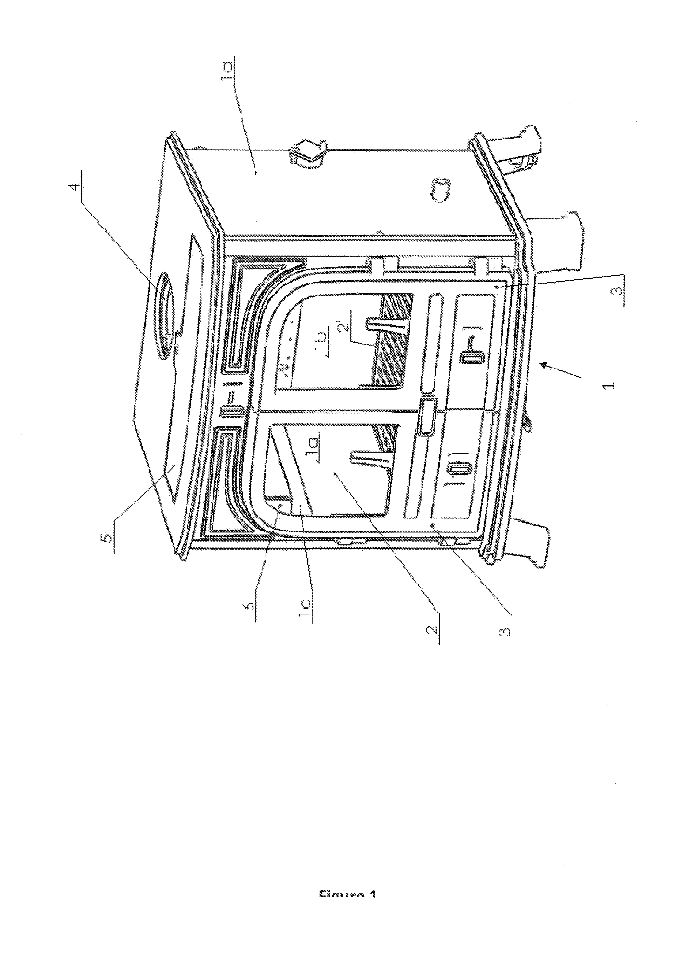

Referring now to Figures 1 to 3, there is shown a solid fuel burning stove 1 having a fire box 2 having a fuel bed 2', the fire box 2 being closed by doors 3, a flue 4, a service opening 5, and removable cover 5', and a boiler 6.

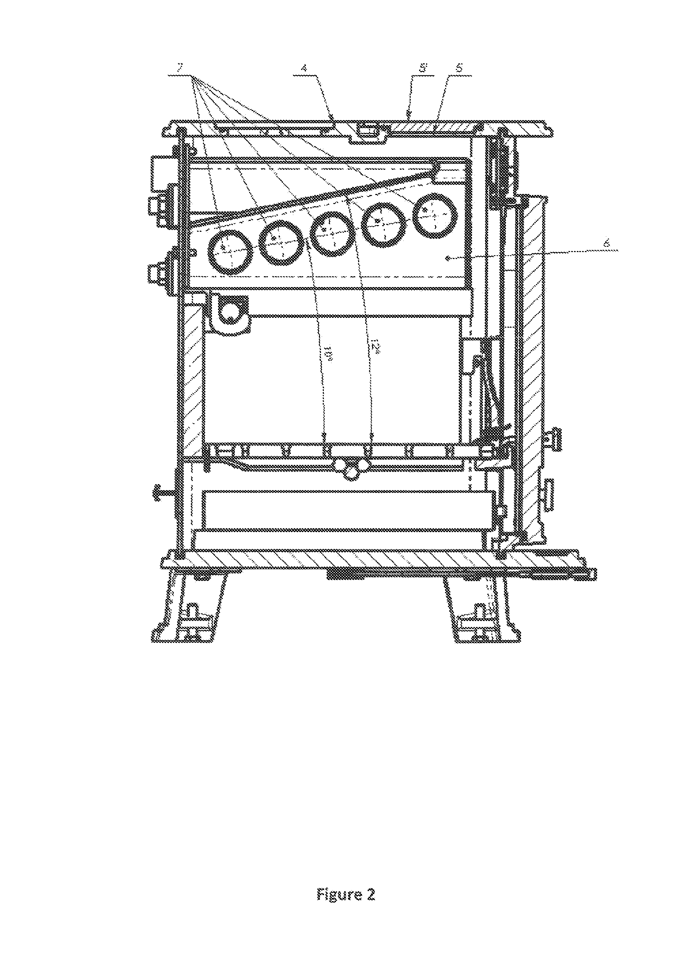

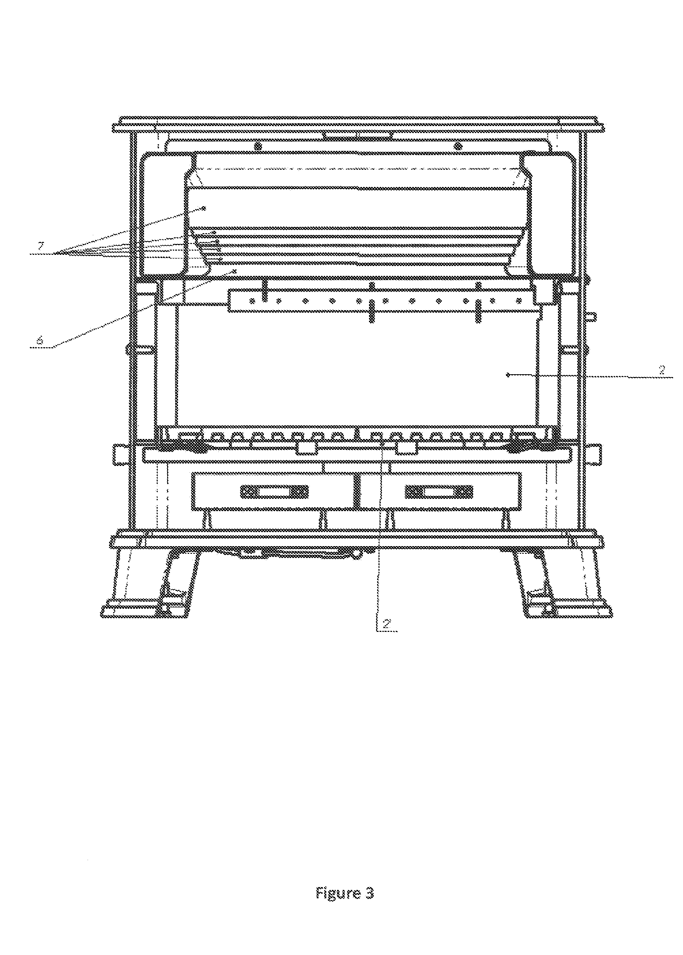

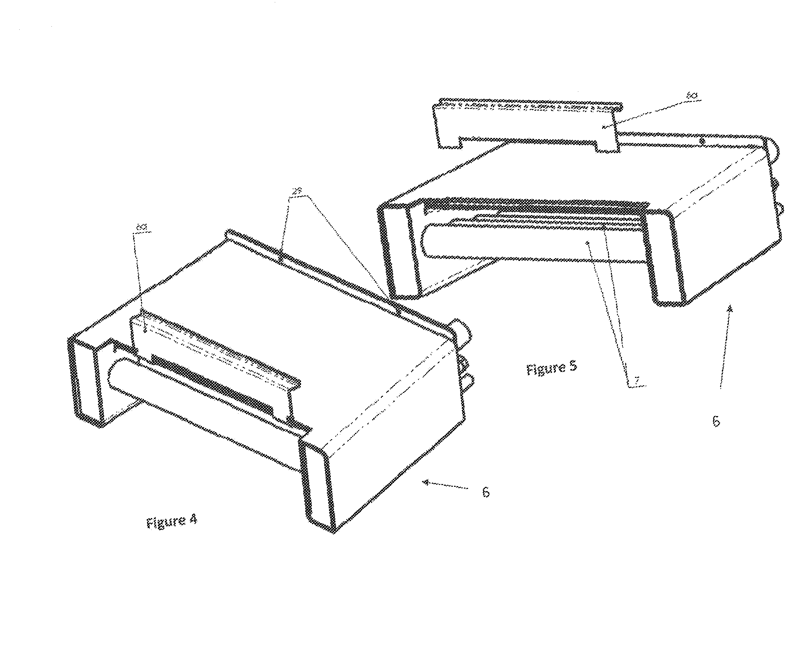

The boiler 6 is situated in the upper part of the fire box 2. This is best seen in Figure 2. Exhaust gases emanating from the firebox 2 to escape around the front of the boiler 6 around baffle 6a (see Figures 4 & 5) through the flue 4, and any chimney connected thereto. As can be seen from Figures 2 and 3, the boiler includes a plurality of spaced apart tubes 7 which, in the illustrated example, lie on a common axis inclined to the horizontal at an angle of ten degrees.

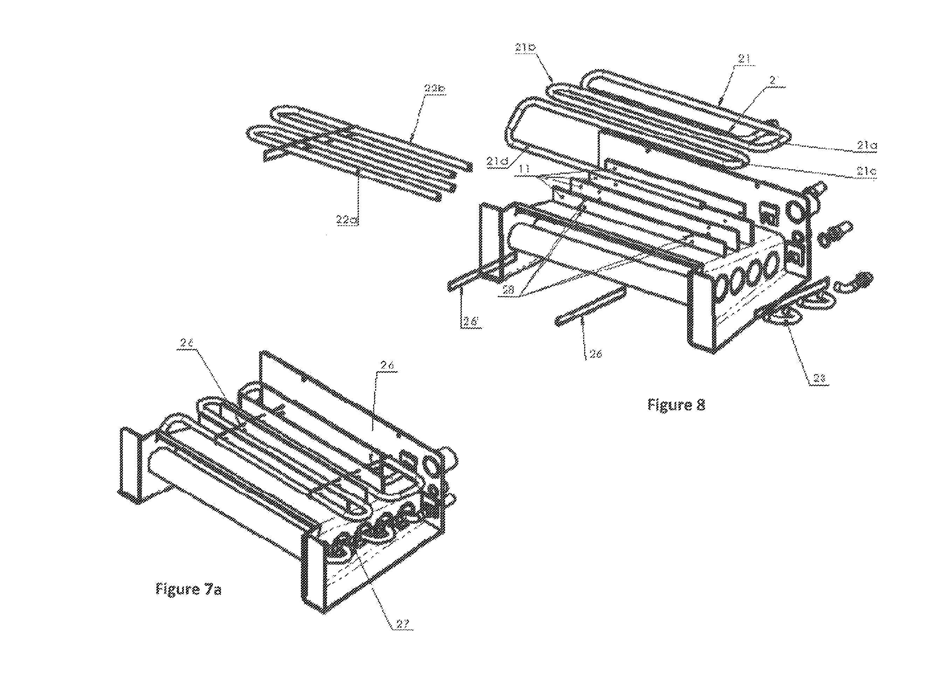

The construction of the boiler 6 will now be described in greater detail with reference to Figures 4 to 8.

Referring first to Figures 4 to 6, the boiler 6 comprises a base 6' which includes a pair of spaced apart side walls 8, a back wall 9, a plate 10 extending between the side walls 8 and a plurality of tubes 7 also extending between the side walls 8. The tubes 7 are situated below the plate 10. Mounted on the upper surface of the top plate 10 is a plurality of fins 11, which extend upwardly from the plate. In the illustrated example, each of the fins 11 is of a different height, the fin closest to the back wall 9 being taller than the fin closest to a front lip 10' of the plate 10. Preferably, the fins 11 are welded to the plate 10.

Extending from the side walls 8 are two small front wall portions 13. Bottom wall portions 14 extend from the bottom edge of each side wall 8.

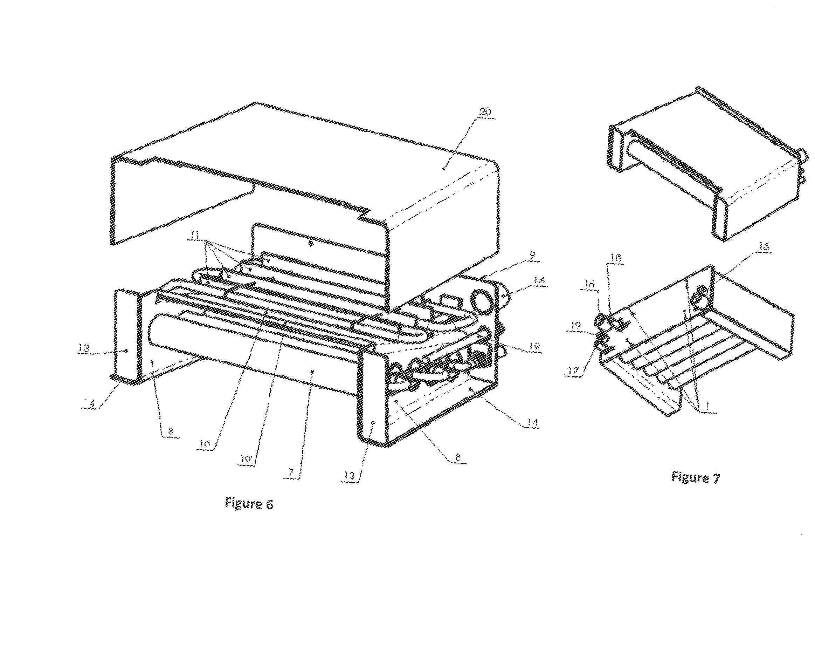

As can be seen from Figures 2 and 6, the plate 10 lies at an angle of about twelve degrees to the longitudinal axis of the bottom edge of, the side walls 8. The purpose of arranging the plate 10 such that it lies at an angle to the longitudinal axis of the bottom edge of the side walls 8 is to ensure a good flow of combustion gases from the fire box to the flue.

Also, it will be noted that the angle of inclination of the top plate is greater than the angle of inclination of the axis on which the tubes 7 lie. This difference in angles of inclination to the horizontal facilitates cleaning of the boiler 6.

The back plate 9 mounts a cold fluid inlet 15 and a hot fluid outlet 16. The back plate 9 further mounts a cooling fluid inlet 17 and outlet 18, and a temperature sensor 19. The boiler 6 is enclosed by a lid 20 which is mounted on the base 6'. The interface between the lid 20 and the base 6' is sealed either by a suitable sealant, or by welding or brazing, the components of the boiler being metallic.

Referring now to Figures 6, 7a and 8, a cooling fluid circuit comprising a plurality of tubular sections 22, 23, 24 and 25 is mounted about the base 6' of the boiler 6. The first parts 21 a, 21b and 21c are mounted on the top of the top plate 10 and extend longitudinally along the space between the fins 11. The parts 21d and 21e extend through tube 7 proximate the front of the top plate 10 and the tube 7 proximate the back plate 9 respectively. The cooling fluid circuit is made continuous by attachment of sections 22 to section 21d and sections 23, 24 and 25 respectively, the sections 22 extending through tubes 7. The free end of section 25 is connected to the cooling fluid inlet 17, and the free end of section 21e is connected to the cooling fluid outlet 18. After attaching the respective sections together, they are secured into one cooling fluid circuit by sealing the joints, for example by brazing in the case of copper tubes. The sections of the cooling fluid circuit are held in position by top clips 26 and bottom clips 27. The top clips 26 extend above and below the tubes of cooling circuit extending between the fins and pass through apertures 28 in the fins 11. The bottom clips 27 extend above and below the tubes of the cooling circuit that pass through the tubes 7.

In the illustrated example, the back plate is provided with apertures 29 through which fastening elements, such as screws or bolts may be passed to attach the boiler 6 to the stove. As can be seen from Figure 1, a runner 1c extends around the side walls 1a and back wall 1b of the stove 1, and the boiler 6 rests on this runner.

The boiler 6 provides two fluid paths, one being between the water inlet 15 and outlet 16 and the other being between inlet 17 and outlet 18. The fluid path between inlet 15 and outlet 16 is through the void formed between the lid 20 and the base 6'. The fluid path between inlet 17 and outlet 18 is through the connected tubular sections 21 to 25 of the cooling fluid circuit.

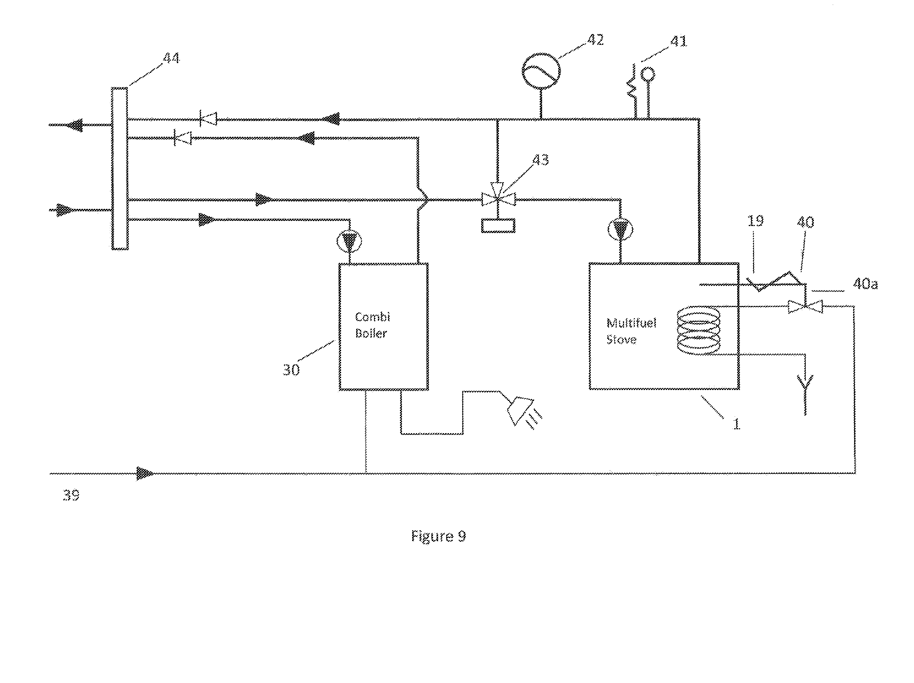

Figures 9 to 12 illustrate a number of examples of how the boiler of a stove according to the invention may be plumbed into a hot water and/or central heating water circuit.

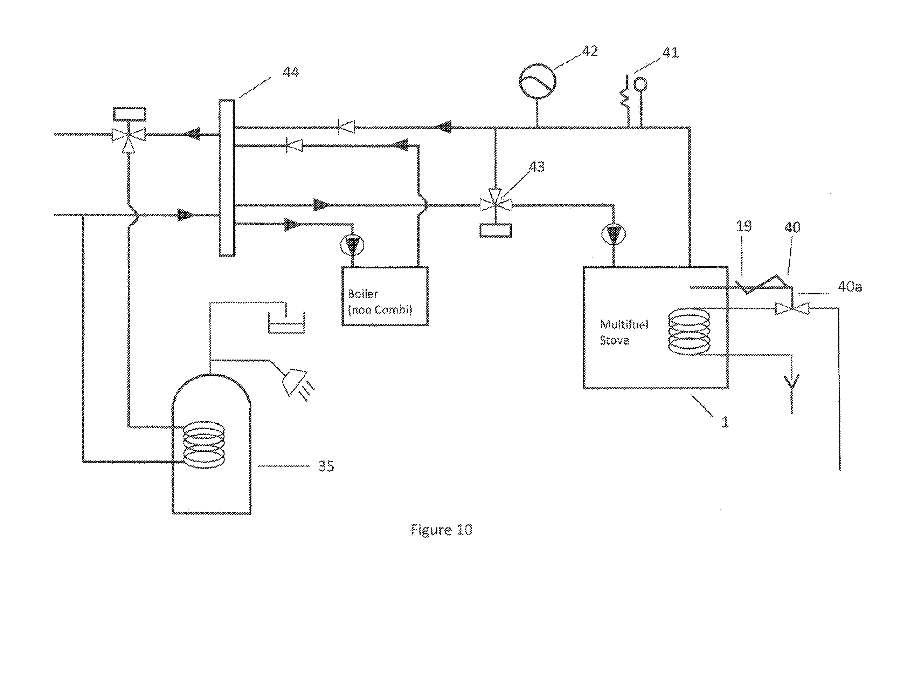

In Figure 9 the heat sources are the stove 1 and a combi boiler 30. In Figure 10, the heat sources are a stove 1, a boiler 31 that is not a combi boiler, and hence the inclusion of an unvented hot water cylinder 35 in the circuit.

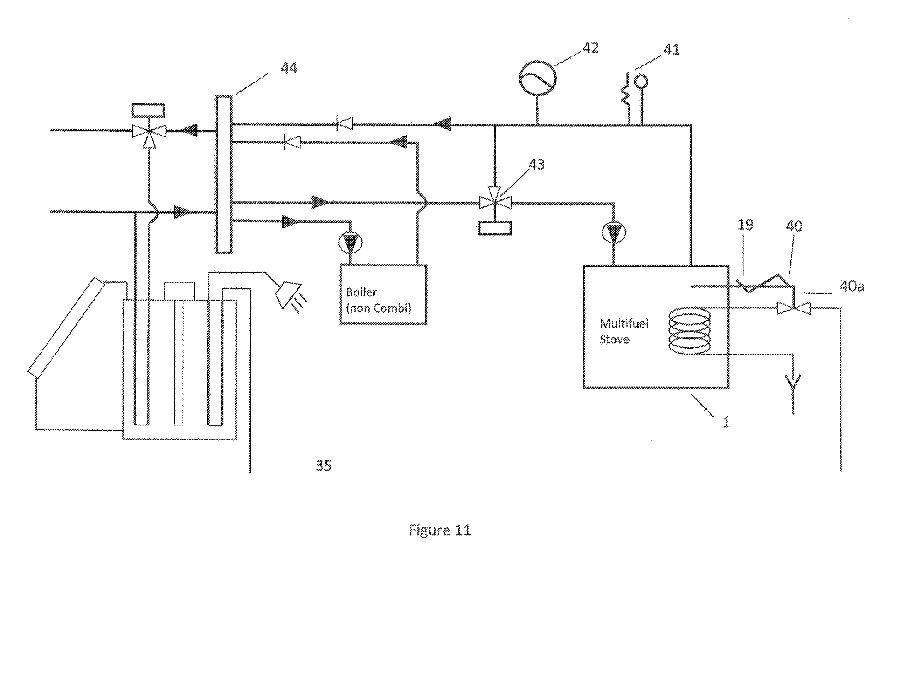

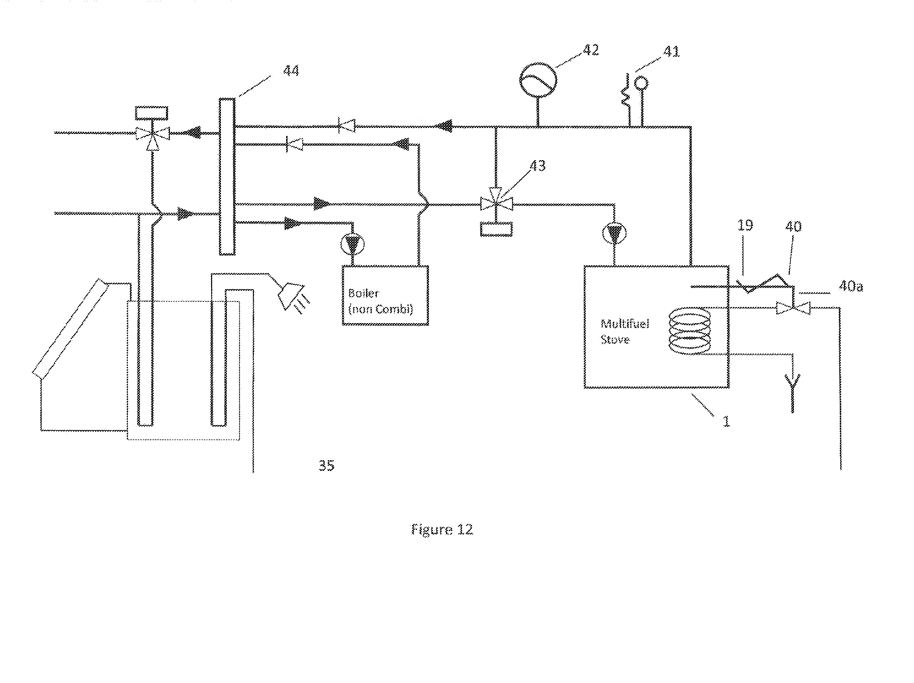

In Figure 11, the heat sources are a stove 1, a boiler 31 that is not a combi boiler, a solar heater 32 and an immersion heater 33. The system also includes a thermal store 34. In Figure 12, the immersion heater is replaced by a heating coil 34 for heating the water used in the heating system as well as for heating domestic hot water.

The heating and hot water systems illustrated in Figures 9 to 12 include some common elements that allow the boiler 6 in the stove 1 to operate safely.

Each circuit includes cold water safety system 40, a pressure relief valve 41, an expansion vessel 42, a corrosion prevention system 43 and a low loss header 44.

The heating fluid in each of the circuits illustrated is water, as is common in domestic hot water and central heating system. The mains cold water supply 39 is connected via the cold water safety system to the inlet 17 of the cooling fluid circuit. The cold water inlet 15 of the boiler is connected to an outlet of the corrosion prevention system 43. The pressure relief valve is situated in the heated water line downstream of the boiler 6 and upstream of a low loss header 44. Also located in the fluid line connecting the downstream side of the boiler 6 with the low loss header 44 is an expansion vessel 42. In the illustrated examples the expansion vessel 42 is down stream of the pressure relief valve 41.

Operation of the stove illustrated in Figures 1 to 3 and the boiler illustrated in Figures 4 to 8 will now be described with reference to the hot water/central heating systems illustrated in Figures 9 to 12.

The stove 1 is loaded with fuel and the fuel ignited. Water under mains pressure is delivered to the boiler 6 via the three way valve 43 forming the corrosion prevention system. This thermally actuated valve ensures that once the system has reached its operating temperature input water to the boiler is pre-heated to 55 C. Until the system reaches its operating temperature, the input water mains water via the low loss header 44. Elevating the temperature of the input water to the boiler 6 improves the longevity of the boiler. The cold water safety system 40 is also connected to the mains water supply 39. The cold water safety system 40 comprises a thermal valve 40a which in this example is set to be actuated at 97 C. The cold water safety system 40 also includes a temperature sensor 19 which senses when the temperature of the water in the boiler 6 has exceeded 97 C. Upon receipt of this signal the thermal valve 40a opens to allow cold water to flow through the cooling fluid circuit. The cooling fluid outlet 18 is connected to a pipe the open end of which is located safely, preferably debouching into an external drain. Typically, the end of such a pipe would pass through an outside wall of the house in which the stove 1 is situated. The sensor 19 may also be connected to an alarm of some form to call the attention of an occupant of the house. Given the arrangement of the cooling fluid circuit in the heat exchanger of the boiler 6, when connected to a water main carrying water at a pressure of at least 1.5 bar, the water in the boiler 6 may be cooled down to a temperature of 50 to 60C within about one minute of the valve 40a of the cold water safety system being opened to allow cold water under mains pressure to enter the cooling fluid circuit.

The pressure relief valve 41 provides another level of safety. In the event of the pressure in the fluid line between the boiler outlet and the low loss header exceeding a certain pressure, the pressure relief valve is actuated and fluid in that fluid line is released. Typically, the outlet of the pressure relief valve discharges externally of the building in which the hot water/central heating circuit is situated. Whilst pressure relief valves are known in the prior art and one is included here as a second safety device, the provision of a pressure relief valve is not in itself sufficient, since relieving the pressure in the system does not necessarily have any significant effect on the temperature of the boiler. In the present case, water debouched via the pressure relief valve would be replaced in the boiler by water pre-heated to 55 C. Assuming that the reason for the pressure exceeding a threshold value remains present, the water in the boiler 6 may become over-pressurised again. Should the pressure relief valve fail, the system may explode.

The expansion vessel 42 is provided to take up expansion of the water in the circuit as its temperature increases.

The corrosion prevention system 43 is not essential to the hot water/central heating circuit of the invention. Whilst it serves to increase the longevity of the boiler 6, it is not necessary for the safe operation of the circuit.

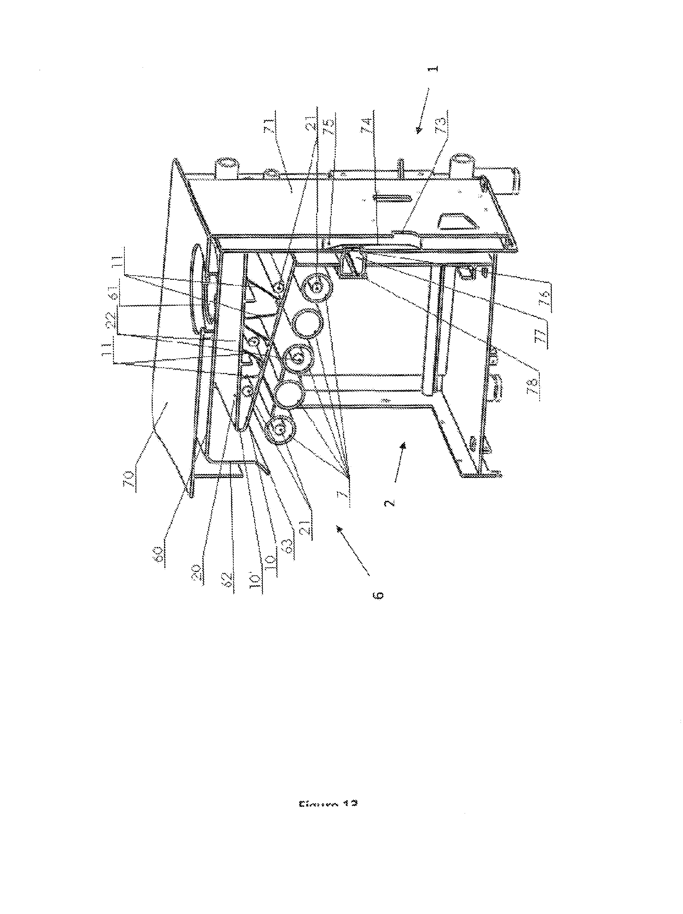

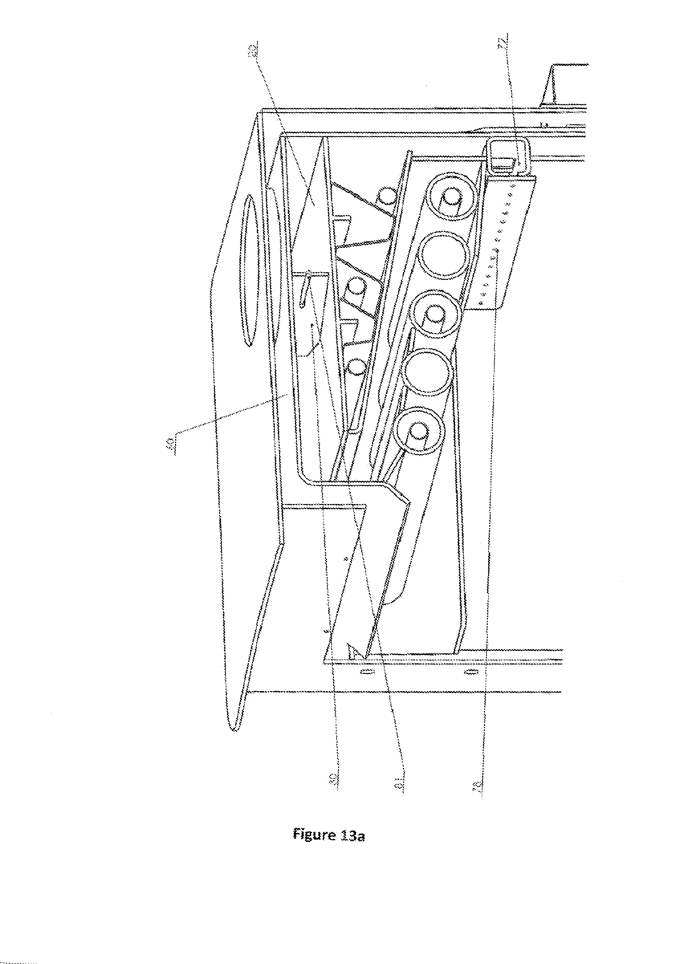

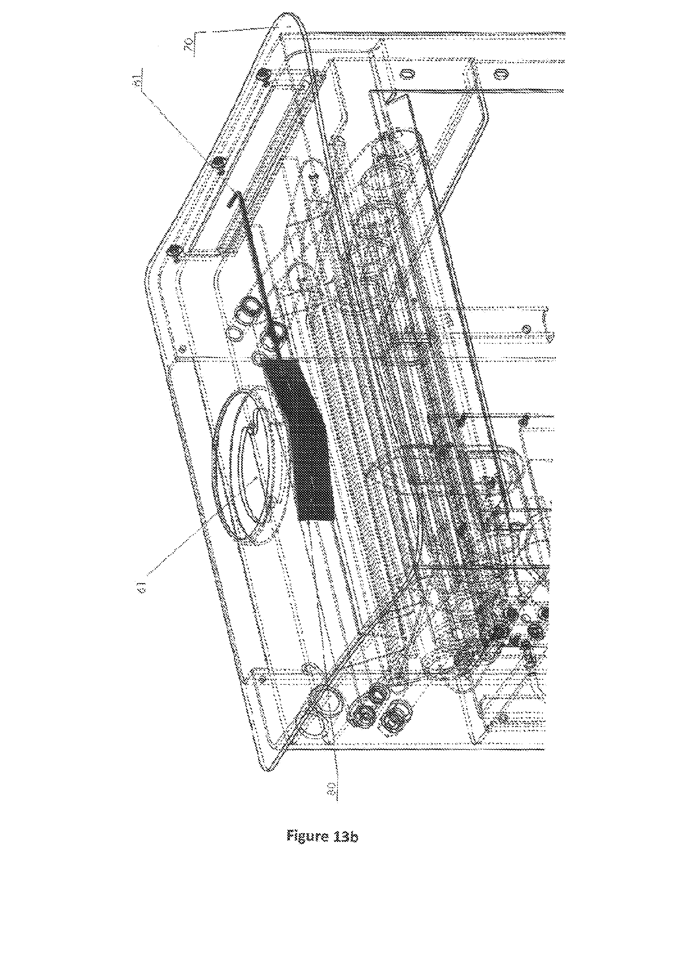

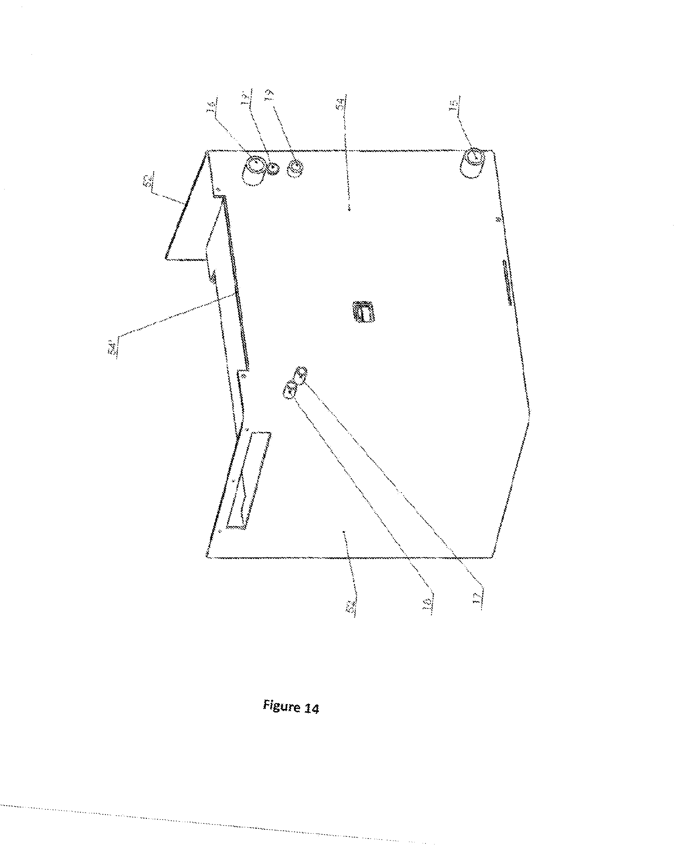

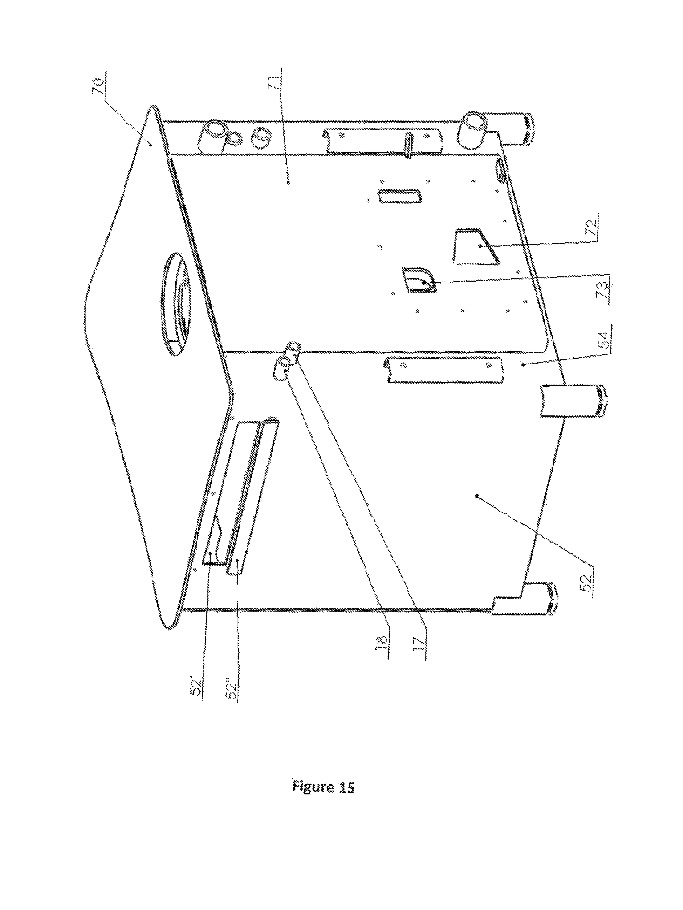

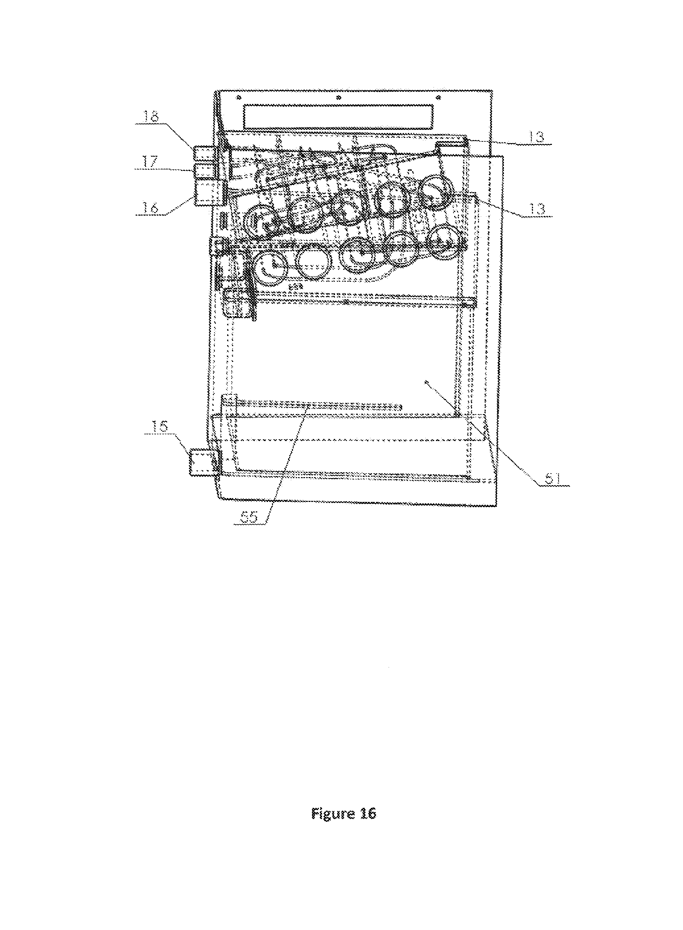

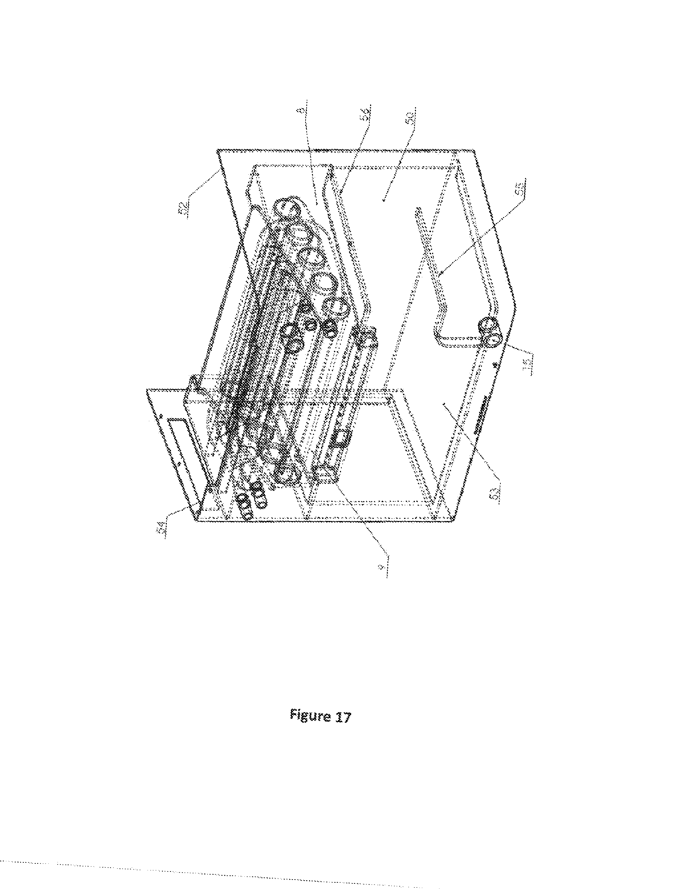

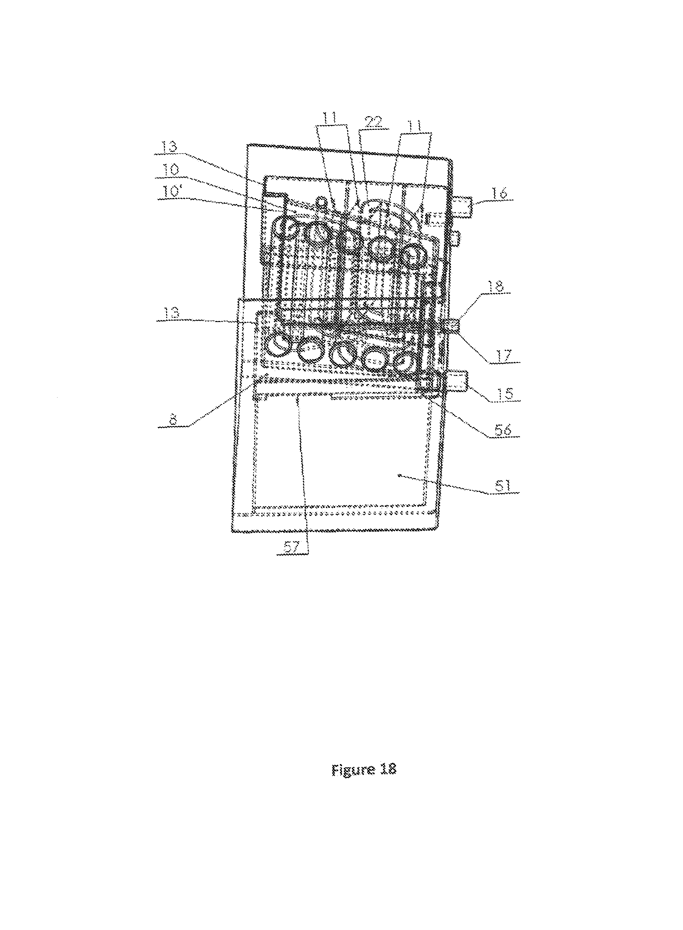

Figures 13 to 18 illustrate an alternative embodiment of the invention in which the boiler rather than being a separate part and removable from the firebox of the stove, the boiler is formed integrally with the firebox of the stove. In fact, in the illustrated example, the boiler also includes a jacket extending around three sides of the firebox, which increases the volume of water that a firebox of a given size is capable of heating. In Figures 13 to 18, the components of the boiler that correspond to the boiler illustrated in Figures 1 to 8 are referenced with the same numerals.

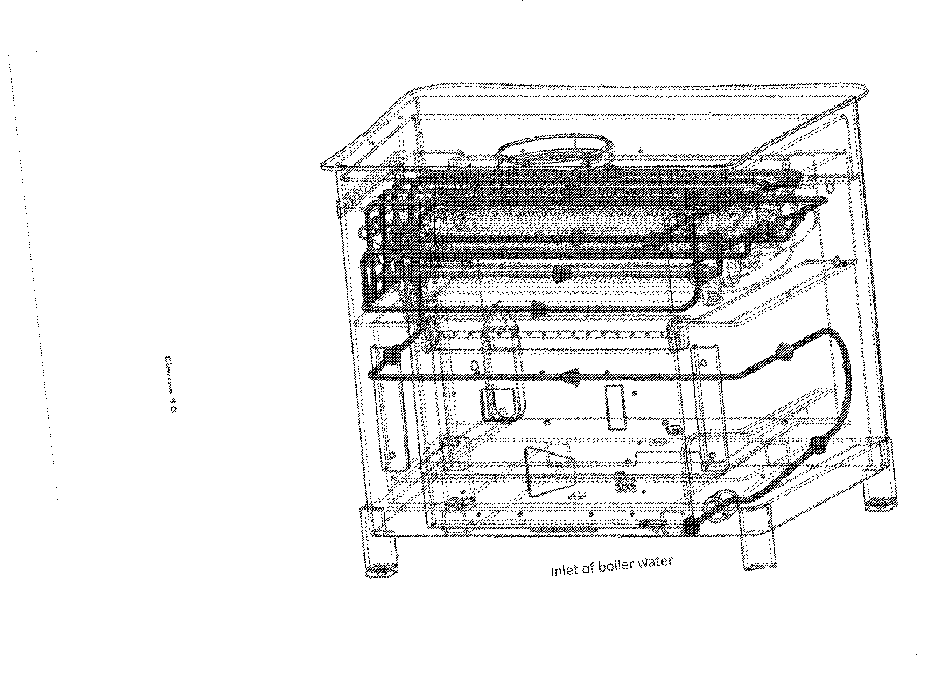

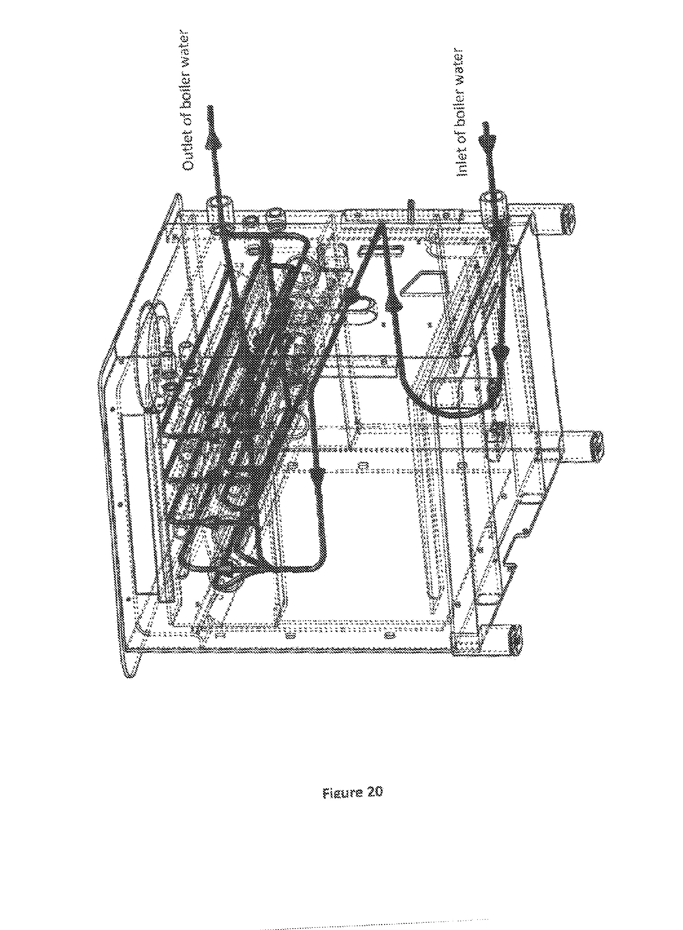

Referring specifically to Figures 13, 16, 17, the stove 1 comprises a firebox 2 with a boiler 6 situated in the upper part of the firebox. The firebox 2 is surrounded by a water jacket 50 which is formed by side walls 51, 52 and back walls 53, 54. Water enters the jacket 50 through cold water inlet 15. The path to be followed by the cold water is guided by a baffle plate 55 which extends between the back walls 53, 54 first extending vertically, then horizontally, and around the corner joining the back walls 53, 54 to the side walls 51, 52. In the illustrated example, the baffle 55 extends along approximately 2/3rds the length of the side walls 51, 52 and follows the path illustrated in Figure 19. The water jacket 50 is bounded along its upper edge by a plate 56 that extends between the side walls 51, 52 and the back walls 53, 54. The plate 56 is substantially U-shaped in plan view and includes an opening 57 for entry of water from the jacket 50 into the boiler 6, as is best appreciated from Figure 20.

The tubes 7 of the boiler 6 extend between the side walls 8. Hence water may flow through the tubes into the space defined by, the front walls 13, the side walls 8, the plate 56, the inner side walls 51 of the water jacket 50, the back wall 9 of the boiler and the back wall 54 of the water jacket, the top plate 10 of the boiler and the cover plate 20. The back wall 9 of the boiler in this case is a part of the back wall 53 of the water jacket. Fins 11 extend from the top plate 10 to the underside of the cover plate 20.

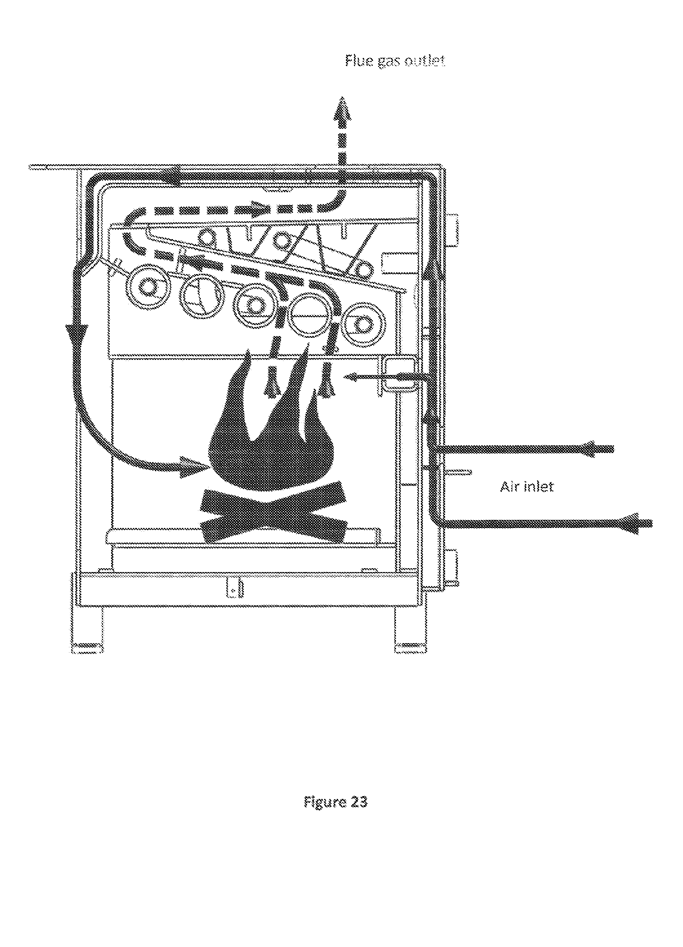

In the embodiment illustrated in Figures 13 to 23, the top plate 20 does not include downwardly extending walls, these boundaries being provided by the inner side walls 51 of the water jacket 50.

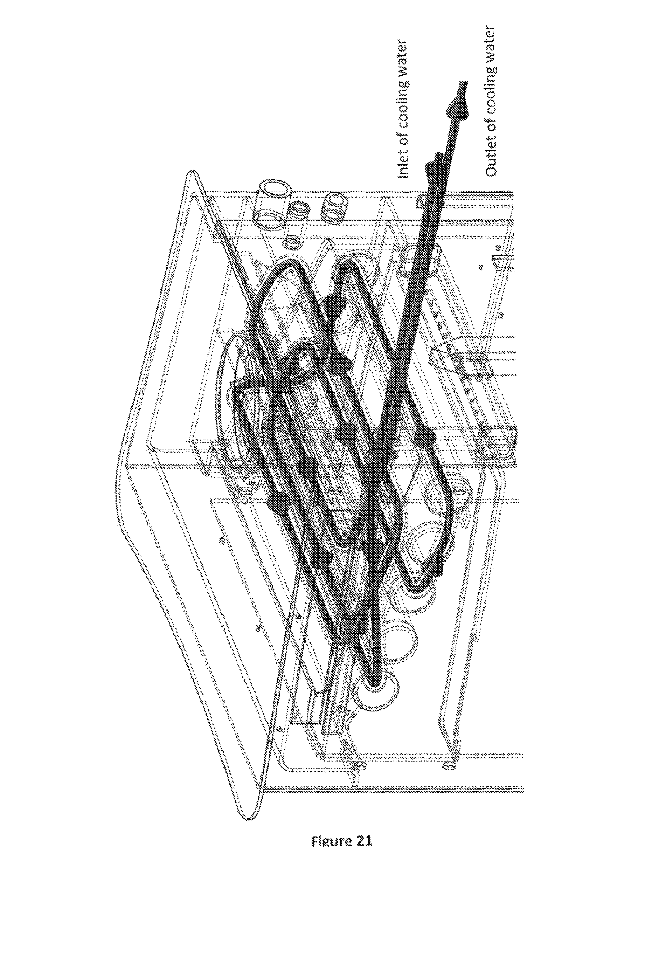

A cooling water inlet 17 and outlet 18 are mounted in the outer back wall 54 of the water jacket 50 and extend through to the inner back wall 53 being connected to respective ends of the cooling fluid circuit formed by conduit sections 22 (for the sake of clarity, reference numerals for the other sections of the cooling fluid circuit are not marked up on Figures 13 to 18, but are the same as referred to above in relation to Figures 6, 7a and 8. The flow path of cooling fluid through the cooling circuit is illustrated in Figure 21. A temperature sensor 19 is provided to sense the water temperature in the boiler and is part of the control system for releasing cold water into the cooling system. A further thermostat probe may be located in opening 19'.

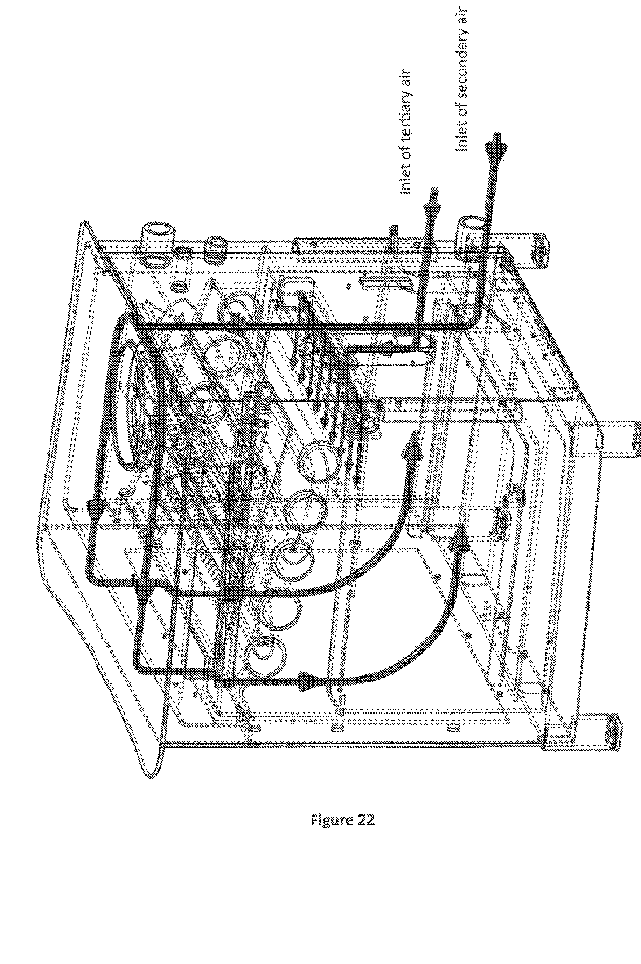

The stove 1 illustrated in Figures 13 to 23 includes a baffle plate 60 which includes a flue gas opening 61, a downwardly extending front section 62 and a downwardly and forwardly extending front lip 63. The space defined between the top surface of the baffle plate 60 and the underside of the stove top 70 defines an air inlet pathway, which is in fluid communication with an air pathway formed between the outer side of the outer back wall 54 and the inner surface of plate 71, which includes an air inlet 72 and an air inlet 73. Air passing through inlet 72 follows the path indicated by the arrow extending from "inlet of secondary air" in Figure 22. The air passes upward between the plates 54 and 71 and over the top of the fire box 2 and boiler 6 in the space defined by baffle plate 60 and the stove top 70 and is guided to the front of fire box by the downwardly extending front section 62 and the forwardly and downwardly extending lip 63. The air inlet 73 communicates with a first chamber 74 formed between the inner surface of plate 71 and the outer surface of back wall 54 and is bounded by a plate 75 extending between the plate 71 and wall 54. The first chamber 74 communicates with a second chamber 77 via an aperture 76 formed in the back wall 54. The front wall of the second chamber 77 is situated in the firebox 2 and includes openings 78 that allow air to enter the firebox 2 from the air inlet 73. The pathway followed by the air from inlet 73 is indicated by the arrow extending from "inlet of third air" in Figure 22.

The side wall 52 includes an opening 52' and associated cover plate 52". The opening is provided to allow access to the space formed between the upper surface of cover plate 20 and the underside of baffle plate 60.

Referring now to Figures 13a and 13b, a baffle 80 is mounted on a rod 81, the baffle being positioned to the front of the exhaust gas flue 61. The baffle prevents the exhaust gases being drawn directly up the flue 61.

The water jacket and/or the arrangement of walls, plates and baffles described with reference to Figures 13 to 23 may be used in association with a boiler as described with reference to Figure 1 to 8 with minor modification.

## Claims

1. A boiler for a solid fuel burning stove, the boiler comprising a first fluid inlet and a first fluid outlet and a first fluid passageway between the first fluid inlet and outlet, the boiler being adapted to transfer heat from a heat source proximate the boiler to a heating fluid medium in the first fluid passageway, the boiler further comprising a second fluid inlet and a second fluid outlet and a second fluid passageway extending between the second fluid inlet and outlet, and wherein the second fluid passageway is configured to extract heat from the heated fluid medium upon passage of a cooling fluid medium through the second fluid passageway.

2. A boiler according to Claim 1, wherein:
the boiler comprises a chamber and wherein the chamber provides the first fluid passageway;
or
wherein the boiler comprises a chamber and wherein the chamber provides the first fluid passageway and wherein the second fluid passageway comprises a conduit extending between the second fluid inlet and second fluid outlet, and being situated at least partially in the first fluid passageway.

3. A boiler according to Claim 1 or 2, wherein:
the first fluid passageway is bounded by at least one wall, the at least one wall having an inner surface and wherein at least one fin extends an inner surface of the first fluid passageway;
or
the first fluid passageway is bounded by at least one wall, the at least one wall having an inner surface and wherein at least one fin extends an inner surface of the first fluid passageway and, wherein a plurality of spaced apart fins extend from the said inner surface;
or
the first fluid passageway is bounded by at least one wall, the at least one wall having an inner surface and wherein at least one fin extends an inner surface of the first fluid passageway and,
wherein a plurality of spaced apart fins extend from the said inner surface and wherein the second fluid passageway extends between the said spaced apart fins.

4. A boiler according to any preceding claim, wherein:
the first fluid passageway includes a plurality of spaced apart fluid carrying conduits and wherein the second fluid passageway passes through at least one of the said conduits;
or
the first fluid passageway includes a plurality of spaced apart fluid carrying conduits and wherein
the second fluid passageway passes through at least one of the said conduits and wherein the spaced apart fluid carrying conduits lie on a common axis.

5. A boiler according to Claim 4, wherein:
the spaced apart fluid carrying conduits lie on an axis that is inclined to the horizontal;
or
the spaced apart fluid carrying conduits lie on an axis that is inclined to the horizontal and
wherein the said axis is inclined to the horizontal at an angle of up to 30 degrees;
or
the spaced apart fluid carrying conduits lie on an axis that is inclined to the horizontal and
wherein the said axis is inclined to the horizontal at an angle of up to 30 degrees and wherein the said axis is inclined to the horizontal at an angle of 10 degrees.

6. A boiler according to any preceding claim, further including a temperature sensor configured to sense the temperature of the heating fluid medium in the boiler.

7. A boiler according to any preceding claim wherein:
the boiler includes a plate situated above the said spaced apart fluid carrying conduits;
or
the boiler includes a plate situated above the said spaced apart fluid carrying conduits and
wherein the plate forms an underside of said chamber.

8. A boiler according to Claim 7, wherein:
the plate is inclined to the horizontal by an angle greater than or equal to the angle of inclination to the horizontal of the axis on which said fluid carrying conduits lie;
or
the plate is inclined to the horizontal by an angle greater than or equal to the angle of inclination to the horizontal of the axis on which said fluid carrying conduits lie and wherein the plate is inclined to the horizontal at an angle greater than the angle of inclination of the axis of Claim 5.

9. A boiler according to Claim 8, wherein the plate is inclined to the horizontal at an angle of 12 degrees when the said axis is inclined to the horizontal at an angle of 10 degrees.

10. A solid fuel burning stove including a firebox, a fuel bed, at least one air inlet, an exhaust gas outlet and a boiler having a fluid inlet and a fluid outlet, wherein the said boiler is situated in the top part of the firebox, wherein the boiler is a boiler as claimed in any of Claims 1 to 9.

11. A solid fuel burning stove according to Claim 10, wherein:
the stove includes a water jacket in at least one wall adjacent the firebox, the jacket including a fluid inlet and a fluid outlet, the fluid outlet forming the fluid inlet to the boiler;
or
the plate is inclined to the horizontal by an angle greater than or equal to the angle of inclination to the horizontal of the axis on which said fluid carrying conduits lie and wherein the water jacket includes at least one baffle adapted to direct the path of travel of water entering the jacket through the water inlet.

12. A solid fuel burning stove according to Claim 11, wherein the fluid outlet of the water jacket is defined in a baffle separating the water jacket from the boiler.

13. A heating system including a stove according to any of Claims 10 to 12 and a cold water safety system including a valve, wherein the first fluid inlet is connected to a source of heating fluid medium, and the first outlet is connected to a heating circuit, and wherein the second fluid inlet is connected to a source of pressurised cold water and the second fluid outlet is connected to an outflow, and wherein the valve is configured to open when a signal received from the temperature sensor associated with said boiler exceeds a first threshold temperature.

14. A heating system according to Claim 13, wherein the said valve is configured to remain open until the sensed boiler temperature has fallen below a second threshold temperature.

15. A heating system according to Claim 13 or 14, further including one or more of:
a pressure relief valve in the heating circuit, said pressure relief valve being configured to open when the pressure within the heating circuit exceeds a threshold pressure; a thermal valve connected to the source of heating fluid medium, the heating circuit and the first input, wherein
the thermal valve is adapted to control the temperature of the water flowing into the boiler through the first input; an expansion vessel; a low loss header.
